# EUROPEAN PATENT SPECIFICATION

(11) **EP 2 806 753 B1**
(45) Date of publication and mention of the grant of the patent: **29.05.2019**
(21) Application number: 13738217.2
(22) Date of filing: 16.01.2013
(51) Int. Cl.: A23L 2/02, A23C 9/133, A23L 19/00, A23L 33/105, A23L 33/22

(54) **METHOD FOR CONVERTING BERRY WASTE**
VERFAHREN ZUR UMWANDLUNG VON BEERENABFÄLLEN
PROCÉDÉ DE CONVERSION DE DÉCHETS DE BAIES

(30) Priority: 17.01.2012 FI 20125055
(43) Date of publication of application: 03.12.2014
(73) Proprietor: Teknologian tutkimuskeskus VTT Oy, 02150 Espoo (FI)
(72) Inventor: SIBAKOV, Juhani, FI-02044 VTT (FI); KÖSSÖ, Tuija, FI-02044 VTT (FI); NORDLUND, Emilia, FI-02044 VTT (FI)
(74) Representative: Boco IP Oy Ab
(86) International application number: PCT/FI2013/050047
(87) International publication number: WO 2013/107935

(56) References cited:
- WO-A1-2005/002349
- WO-A1-2008/011086
- WO-A1-2011/063386
- WO-A1-2012/047786
- WO-A1-2012/047786
- DE-A1-102011 101 512
- DE-U1-202011 004 314
- JP-A- S59 166 053
- JP-A- 2004 024 128
- US-A- 4 775 477
- US-A- 5 202 142
- US-A1- 2009 035 441
- US-A1- 2009 301 347
- Iva Klarica: "A Guide to D-Values in Pharmaceutical Particle Characterisation", , 2017, pages 1-5, XP055406862, Retrieved from the Internet: URL:https://www.innopharmalabs.com/tech/ap plications-and-processes/particle-size-dis tribution [retrieved on 2017-09-14]

## Description

### FIELD OF THE INVENTION

The invention relates to new applications of side streams of berry industry. Particularly the invention relates to methods for utilizing berry waste in food products and to food products comprising berry waste. The invention further relates to a method for the manufacture of food products.

### BACKGROUND

Food industry uses wild berries and cultured berries in the manufacture of wide range of products, such as pastes, juices, jams, conserves, milk based products, sweets and the like. Large volumes of waste are produced in the processing of berries in the food industry, which waste material is utilized to a very small extent. Most of the waste material is currently discarded or transported to landfill or dumping area, thus increasing the environmental burden. Some of this waste is subjected to extensive drying followed by extraction of seed oils. Drying of the waste is an energy consuming operation and only a very small portion of the material is used.

Typically, in the processing berries are mechanically cleaned, followed by removing of the berry juice or paste by suitable methods, such as pressing. The remaining waste material, such as pomace, press cake or sediment waste fraction comprises berry skins, seeds and pith, which contain fibers and various bioactive compounds.

The high content of fibers and the insoluble nature of the fibers give the material an unpleasant stick-like mouth-feel, and the bitter and astringent taste of the pomace makes it unpleasant to eat. Thus the use of these waste materials has not been popular in food products.

Stanley, R. et al., Spec. Publ. Royal Soc. Chem. (2001), 269, Biologically-Active Phytochemicals in Food, 552-556, describes the use of commercial enzyme preparations, wet milling and heating to solubilize phenolic and antioxidant activity from waste blueberry skins.

Fujio, Y. et al., Int. J. Food Sci. Tech. (1989), 24(4), 439-445 discloses wet-fine grinding of waste biomass residue from Satsuma mandarin juice production, followed by separation into insoluble and soluble fractions by centrifugation. The soluble fraction contained high amounts of pectic substances.

WO 2012/047786 A1 is a disclosure according to Article 54(3) EPC and discloses a method for producing a food product using cranberry pomace mixed with water and cranberry juice, which is reduced to 75 micron particle size.

JP 2004024128 A discloses the use of mulberry juice residues in the manufacture of jam. The juice residue is ground, blended with water and other ingredients to produce jam.

WO 2011063386 A1 discloses a method for using side streams from juice production, where the side streams are homogenized and the homogenized slurry is added to juices.

Based on the above it can be seen that there exists a need to provide improved methods for utilizing berry waste in food compositions, and food compositions comprising said waste material, where the disadvantages of the methods of state of the art can be avoided or at least substantially decreased.

### SUMMARY

The present invention is based on studies on wet-grinding of pomace or press cake of berries and use of the obtained products. The invention provides simple and effective means for utilizing side streams from berry industry, particularly the pomace, press cake or sediment, in the manufacture of food products. These waste materials are rich in dietary fibre and phenolic antioxidants, both being implicated as being healthy as a part of balanced diet. Said health beneficial effects are described for example in Zafra-Stone, S. et al., Berry anthocyanins as novel antioxidants in human health and disease prevention, Molecular Nutrition & Food Research, (2007) 51: 675-683, Basu, A. et al., Berries: emerging impact on cardiovascular health, Nutr Rev (2010) 68: 168-177, and Hanhineva, K. et al., Impact of dietary polyphenols on carbohydrate metabolism, Int J Mol Sci (2010) 11: 1365-1402.

Herein it is disclosed a method for using side streams from berry industry in the manufacture of food compositions, where at least one side stream selected from pomace, press cake or sediment or a combination thereof, originating from berries, is wet ground from 2 to 4 passes in the presence of water to obtain a homogeneous suspension comprising particles having average particle size from 50 to 1000 µm, followed by blending said suspension with a food product or with starting materials during the manufacture of a food product.

The invention is directed to a method for the manufacture of food products wherein at least one side stream from berry industry, selected from pomace, press cake or a combination thereof originating from berries, and containing from 40 to 70% by weight of water is wet ground from 2 to 4 passes in the presence of water, which is added to the side stream, to obtain a homogeneous suspension having dry matter content of 5-30 % by weight and comprising particles having average particle size from 50 to 1000 µm, followed by blending said suspension with a food product or with starting materials during the manufacture of a food product.

The invention is also directed to a food product comprising at least 6g/100g fibers and a suspension having dry matter content of 5-30% by weight and comprising particles having an average particle size between 50 and 1000 µm, said suspension being obtained from at least one side stream from berry industry, selected from pomace, press cake or a combination thereof, originating from berries.

Accordingly, the present invention provides simple and economic means for utilizing side streams from berry industry in the manufacture of food products, whereby dumping of berry waste can be avoided or at least essentially decreased.

The characteristic features of the invention are presented in the appended claims.

### BRIEF DESCRIPTION OF THE DRAWINGS

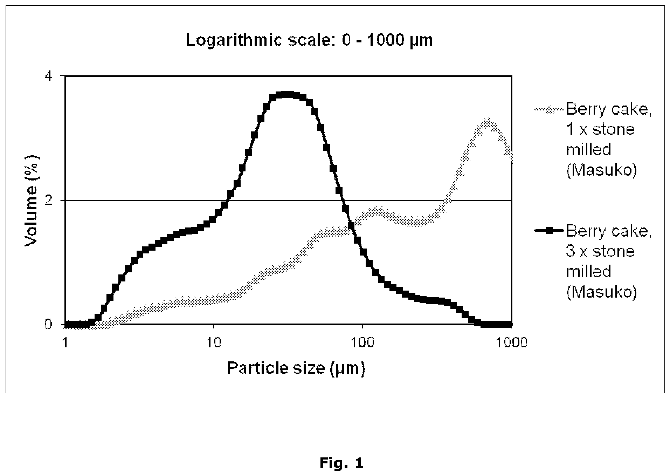

**Figure 1** illustrates graphically average particle size distribution of finely ground berry cake.

### DEFINITIONS

Unless otherwise specified, the terms, which are used in the specification and claims, have the meanings commonly used in the field of food industry. Specifically, the following terms have the meanings indicated below.

The term "berry industry" is understood here to mean all industry relating to the development, refining and manufacture of products and processes relating to wild and cultivated berries.

"Berries" refers here to all wild berries and cultivated berries and any combinations thereof. Examples of wild berries are bilberry, cloudberry, lingonberry, cranberry and hawthorn, and examples of cultivated berries are strawberry, blueberry, blackcurrant and raspberry.

The term "food product" refers here to any edible food composition, which may be in liquid, semi-solid or solid form.

### DETAILED DESCRIPTION OF THE INVENTION

It was found that side streams from berry industry can be utilized as such in the manufacture of various food products and the unpleasant mouth-feel and bitter taste can be avoided in said products without any additional components. Thus the invention provides means for incorporating side streams and fractions from berry industry, particularly the pomace, press cake or sediment originating from berries in food products.

The side streams from berry industry may comprise berries, pulp, berry skins or peels, seeds, some leaves, arbors and conifer needles, depending also how well the berries are cleaned mechanically before processing.

In the present invention, all edible wild berries and cultivated berries and any combinations thereof are suitable. From the ecological point of view, wild berries, which have grown without any manmade fertilizers or pesticides, are particularly suitable.

The side streams and fractions from berry industry, such as pomace, press cake and sediment contain high amounts of various compounds and components beneficial to the health, such as polyphenolic compounds and flavonoids, which are effective antioxidants. Additionally said side streams contain phytosterols and valuable seed oils comprising for example alpha-linoleic acid. The amounts and types of these compounds and components may vary depending of the selection of berries, which are processed. Further, the side streams contain high amounts of insoluble and soluble fibre, which is regarded as beneficial for the human health. The effect of dietary fibre is described by Raninen et al., Dietary fibre type reflects physiological functionality: comparison of grain fibre, inulin and dextrose. Nutrition reviews, (2010) 69(1) 9-21.

Said side streams may be obtained for example from the manufacture of juices, pastes, purees, berryvines, jams, conserves, sweets and the like. Typically in a berry juicing line the berries are pressed and the remaining berry cake is frozen and stored at approx. -20°C for further use. Berry pastes and purees are obtained for example by squeezing berries through a sieve and the remaining berry cake is frozen and stored at approx. -20°C. The obtained pomace, berry cake or sediment contains typically from 40 to 70 % by weight of water, suitably from 50 to 60 % by weight of water.

Additionally the side streams used in the present invention may comprise pomace, press cake or sediment originating from processing of rhubarb *(Rheum rhabarbarum*), which is also often used together with berries in the manufacture of products based berries.

The method for using side streams from berry industry in the manufacture of food products comprises the steps where at least one side stream comprising pomace, press cake or sediment or a combination thereof, originating from berries, is wet ground from 2 to 4 passes in the presence of water to obtain a suspension comprising particles having average particle size from 50 to 1000 µm, followed by blending said suspension with a food product or with starting materials during the manufacture of a food product.

Said side stream or fraction is suitably selected from pomace, press cake or sediment or a combination thereof, originating from berries and obtained from processing of any edible berries.

The wet grinding is carried out in a stone mill, such as a colloid mill or a supermass colloider. Alternatively the side stream may preground using a homogenizator or a coarse mill, followed by grinding with the stone mill. The wet grinding is carried out from 2 to 4 passes in the presence of water, preferably from 2 to 3 passes.

In wet grinding water is added to the side stream to obtain dry matter content of 5 - 30 % by weight, preferably 10 - 25 % by weight in the milled suspension. Water is needed for effective grinding. The grinding apparatus is suitably adjusted according to instructions provided by the mill supplier.

From the wet grinding step a homogeneous gel or suspension is obtained, having an average particle size from 50 to 1000 µm. Suitably the average particle size distribution measured by laser diffraction is D50 = 50-200 µm and D90= 100-1000 µm.

The wet ground suspension stays homogeneous, even at heating. Thus, after grinding the suspension can be frozen, pasteurized, precooked with sugar or used immediately without the risk of phase separation. On the contrary, a side stream product, which is first dried and then ground, does not provide any homogeneous suspension, it starts to separate and sediment rapidly.

The suspension is blended with a food product. Alternatively the suspension may be blended with starting materials during the manufacture of the food products, followed by completing the manufacture of the food product. Thus, for example in the manufacture of yoghurt or other fermented milk product, the suspension may be added to milk or other starting materials used in the manufacture before the fermentation step.

Starting materials refer to any ingredients used in the manufacture of the food products.

Said food products are suitably milk based products, such as yoghurts, drinks, sour cream products, fermented milk based products, etc, berry containing products, such as jams, juices, drinks, berry soups, conserves, pastes, purees, babyfood, etc, nutritional food products, particularly for special use, such as hospital use and hose administration, grain products, such as bread, cereals, snack products, muesli, precooked porridge, fermented grain based products and gluten-free products etc.

The invention is further directed to a method for the manufacture of food products wherein at least one side stream from berry industry, comprising pomace, press cake or sediment or a combination thereof originating from berries, is wet ground from 2 to 4 passes in the presence of water to obtain a homogeneous suspension comprising particles having average particle size from 50 to 1000 µm, and followed by blending said suspension with a food product or with starting materials during the manufacture of a food product, followed by completing the manufacture of said food product.

Sweetening agents selected from sugar, artificial sweeteners, natural sweeteners including stevia alkaloids and any combinations thereof may be added to the products for improving the taste.

The invention is directed to a food composition comprising at least 6g/100g fibres and a suspension comprising particles having an average particle size between 50 and 1000 µm, said suspension obtained from at least one side stream from berry industry, comprising pomace, press cake or a combination thereof, originating from berries.

The present invention provides several advantages. Side streams from berry industry, particularly the pomaces, press cakes and sediments originating from berries can be used in a simple and economic way whereby dumping to the landfills can be avoided or at least significantly reduced. This is also a clear environmental and ecological benefit. Nutritionally rich and valuable side streams of berry industry can be utilized in a simple and efficient way, without any drying steps, in food products. As the harvest of wild bilberries and lingonberries in Finland only is about 400 million kg, the invention has very significant impact in many ways. Food products containing valuable nutritional fibre, and bioactive compounds such as polyphenols, flavonoids, seed oils and vitamins can be obtained.

The invention can be utilized with all edible berries, also in combination with rhubarb.

The nutritional fibres presently used in food products, particularly those based on inulin and polydextrose can be replaced with the natural soluble and insoluble fibre contained in the berry side streams, however still maintaining a pleasant mouth-feel. In the industry there is a general goal to reduce the use of nutritional fibre based on inulin and polydextrose. According to one embodiment of the invention nutritional fibre originate from wild berries containing no pesticides or fertilizers.

Products regarded as fibre source, which by current definition means products containing at least 3g/100g or 1.5g/100kcal fibers, calculated from the total dry weight of the product, can be manufactured using the method described here, as well as products rich in fiber, which by current definition means products containing at least 6g/100g or 3g/100kcal fibers, calculated from the total dry weight of the product.

Wet grinding improves the availability of the beneficial components, such as polyphenols, flavonoids, seed oils, etc. in the products.

The bitter taste of the side streams can be avoided or at least decreased to an undetectable level, and sugar or other sweetening agents may optionally be used for additional masking of the taste.

The invention provides improved stability to the food products, and thus the amounts of emulsifying compounds and fats can be decreased. Additionally, the food products have a pleasant and soft mouth-feel.

### EXAMPLES

The following examples are illustrative of embodiments of the present invention, as described above, and they are not meant to limit the invention in any way.

### EXAMPLE 1

### Wet grinding of berry cake

Frozen berry pomace obtained from bilberry (50%) and lingonberry (50%) juice manufacturing was blended with water to obtain a slurry having a dry matter content of 6% by weight. The slurry was subjected to wet grinding in a Masuko Supermasscolloider stone mill. Average particle size distributions of the obtained suspensions were measured after one pass and three passes. After one pass the product was still coarse (D50 = 270 µm), but after three passes it was much finer (D50 = 29 µm). The particle size distributions are presented in Figure 1. Typically the suspension contains from 3 to 20 g/100g of fibers, depending on the dry matter content of slurry.

### EXAMPLE 2

### Manufacture of a food product (yoghurt)

The suspension obtained in example 1 was added in amounts of 15 - 20 % by weight to vanilla yoghurt containing 10 % by weight of sugar. According to sensory evaluation with 10 persons the properties of the food product were excellent, the mouth-feel was soft and pleasant and no bitter or astringent taste could be detected.

### EXAMPLE 3

### Manufacture of a food product (jam)

The suspension obtained in example 1 was added in amounts up to 25 % by weight to bilberry/blackcurrant jam containing 39 % by weight of sugar. According to sensory evaluation with 10 persons the properties of the food product were excellent, the mouth-feel was soft and pleasant and no bitter or astringent taste could be detected.

### EXAMPLE 4

### Manufacture of a food product (bilerry soup)

The suspension obtained in example 1 was added in amounts up to 20 % by weight to bilerry soup containing 9 % by weight of sugar. According to sensory evaluation with 10 persons the properties of the food product were excellent, the mouth-feel was soft and pleasant and no bitter or astringent taste could be detected.

### EXAMPLE 5

### Manufacture of a food product (yoghurt)

15 % by weight of jam manufactured as instructed in example 3 but containing 20 % by weight of fibers (30 % dry matter) was added in amounts to natural yoghurt. A product rich in fiber was obtained. According to sensory evaluation with 10 persons the properties of the food product were excellent, the mouth-feel was soft and pleasant and no bitter or astringent taste could be detected.

## Claims

1. A method for the manufacture of food products, **characterized in that** the method comprises the steps where at least one side stream from berry industry, comprising pomace, press cake, or a combination thereof originating from berries, and containing from 40 to 70 % by weight of water is wet ground from 2 to 4 passes in the presence of water, which is is added to the side stream, to obtain a homogeneous suspension having dry matter content of 5-30 % by weight and comprising particles having average particle size from 50 to 1000 µm measured by laser diffraction, followed by blending said suspension with a food product or with starting materials during the manufacture of a food product.

2. The method for the manufacture of food products according to claim 1, **characterized in that** the suspension comprises particles having average particle size distribution from D50= 50 µm to D50= 200 µm measured by laser diffraction.

3. The method for the manufacture of food products according to claim 1, **characterized in that** the suspension comprises particles having average particle size distribution from D90= 100 µm to D90= 1000 µm measured by laser diffraction.

4. The method according to any one of claims 1 - 3, **characterized in that** the wet grinding is carried out from 2 to 3 passes.

5. The method according to any one of claims 1 - 4, **characterized in that** the grinding is carried out in a stone mill.

6. The method according to any one of claims 1 - 5, **characterized in that** the food product is selected from milk-based products, fermented milk-based products, berry containing products, baby food, nutritional food, grain products, fermented grain-based products and gluten-free products.

7. The method according to any one of claims 1 - 6, **characterized in that** the side stream comprises additionally pomace, press cake or sediment originating from processing of rhubarb.

8. A food product, **characterized in that** the food product comprises at least 6g/100g fibers, it is manufactured by the method of any one of claims 1 - 7 and the food product comprises a suspension having dry matter content of 5-30 % by weight and comprising particles having an average particle size from 50 to 1000 µm measured by laser diffraction.

9. The food product according to claim 8, **characterized in that** the suspension comprises particles having average particle size distribution from D50= 50 µm to D50= 200 µm measured by laser diffraction.

10. The food product according to claim 8, **characterized in that** the suspension comprises particles having average particle size distribution from D90= 100 µm to D90= 1000 µm measured by laser diffraction.

11. The food product according to claim 10, **characterized in that** the food product is selected from milk-based products, fermented milk-based products, berry containing products, baby food, nutritional food, grain products, fermented grain-based products and gluten-free products.

## Patentansprüche

1. Verfahren zur Herstellung von Lebensmittelprodukten, **dadurch gekennzeichnet, dass** das Verfahren die Schritte umfasst, in denen mindestens ein Nebenstrom aus der Beerenindustrie, welcher beerenstämmigen Trester, Presskuchen oder eine Kombination derselben umfasst und 40 bis 70 Gew.-% Wasser enthält, in Gegenwart von Wasser, das dem Nebenstrom zugesetzt wird, in 2 bis 4 Gängen nassgemahlen wird, um eine homogene Suspension zu erhalten, die einen Trockenmassegehalt von 5-30 Gew.-% aufweist und Partikel mit einer durch Laserbeugung gemessenen mittleren Teilchengröße von 50 bis 1000 µm umfasst, gefolgt vom Vermengen der Suspension mit einem Lebensmittelprodukt oder mit Ausgangsmaterialien während der Herstellung eines Lebensmittelprodukts.

2. Verfahren zur Herstellung von Lebensmittelprodukten nach Anspruch 1, **dadurch gekennzeichnet, dass** die Suspension Partikel mit einer durch Laserbeugung gemessenen mittleren Teilchengrößenverteilung von D50 = 50 µm bis D50 = 200 µm umfasst.

3. Verfahren zur Herstellung von Lebensmittelprodukten nach Anspruch 1, **dadurch gekennzeichnet, dass** die Suspension Partikel mit einer durch Laserbeugung gemessenen mittleren Teilchengrößenverteilung von D90 = 100 µm bis D90 = 1000 µm umfasst.

4. Verfahren nach einem der Ansprüche 1 bis 3, **dadurch gekennzeichnet, dass** die Nassmahlung in 2 bis 3 Gängen ausgeführt wird.

5. Verfahren nach einem der Ansprüche 1 bis 4, **dadurch gekennzeichnet, dass** die Mahlung in einer Steinmühle ausgeführt wird.

6. Verfahren nach einem der Ansprüche 1 bis 5, **dadurch gekennzeichnet, dass** das Lebensmittelprodukt ausgewählt ist aus milchbasierten Produkten, fermentierten milchbasierten Produkten, beerenhaltigen Produkten, Babynahrung, nährstoffreicher Nahrung, Getreideprodukten, fermentierten getreidebasierten Produkten und glutenfreien Produkten.

7. Verfahren nach einem der Ansprüche 1 bis 6, **dadurch gekennzeichnet, dass** der Nebenstrom zusätzlich Trester, Presskuchen oder Sediment aus der Verarbeitung von Rhabarber umfasst.

8. Lebensmittelprodukt, **dadurch gekennzeichnet, dass** das Lebensmittelprodukt mindestens 6g/100g Ballaststoff umfasst, dass es durch das Verfahren nach einem der Ansprüche 1 bis 7 hergestellt wird und dass das Lebensmittelprodukt eine Suspension umfasst, die einen Trockenmassegehalt von 5-30 Gew.-% aufweist und Partikel mit einer durch Laserbeugung gemessenen mittleren Teilchengröße von 50 bis 1000 µm umfasst.

9. Lebensmittelprodukt nach Anspruch 8, **dadurch gekennzeichnet, dass** die Suspension Partikel mit einer durch Laserbeugung gemessenen mittleren Teilchengrößenverteilung von D50 = 50 µm bis D50 = 200 µm umfasst.

10. Lebensmittelprodukt nach Anspruch 8, **dadurch gekennzeichnet, dass** die Suspension Partikel mit einer durch Laserbeugung gemessenen mittleren Teilchengrößenverteilung von D90 = 100 µm bis D90 = 1000 µm umfasst.

11. Lebensmittelprodukt nach Anspruch 10, **dadurch gekennzeichnet, dass** das Lebensmittelprodukt ausgewählt ist aus milchbasierten Produkten, fermentierten milchbasierten Produkten, beerenhaltigen Produkten, Babynahrung, nährstoffreicher Nahrung, Getreideprodukten, fermentierten getreidebasierten Produkten und glutenfreien Produkten.

## Revendications

1. Procédé de fabrication de produits alimentaires, **caractérisé en ce que** le procédé comprend les étapes dans lesquelles au moins un flux latéral de l'industrie des baies, qui comprend du marc, du gâteau de marc ou une combinaison de ceux-ci originaires de baies et contient 40 à 70 % en poids d'eau, est broyé par voie humide en 2 à 4 passes en présence d'eau qui est ajoutée au flux latéral pour obtenir une suspension homogène ayant une teneur en matière sèche de 5 à 30 % en poids et qui comprend des particules ayant une taille de particules moyenne de 50 à 1000 µm mesurée par diffraction laser, puis ladite suspension est mélangée avec un produit alimentaire ou avec des matières premières pendant la fabrication d'un produit alimentaire.

2. Procédé de fabrication de produits alimentaires selon la revendication 1, **caractérisé en ce que** la suspension comprend des particules ayant une granulométrie moyenne de D50 = 50 µm à D50 = 200 µm mesurée par diffraction laser.

3. Procédé de fabrication de produits alimentaires selon la revendication 1, **caractérisé en ce que** la suspension comprend des particules ayant une granulométrie moyenne de D90 = 100 µm à D90 = 1000 µm mesurée par diffraction laser.

4. Procédé selon l'une des revendications 1 à 3, **caractérisé en ce que** le broyage humide est réalisé en 2 à 3 passes.

5. Procédé selon l'une des revendications 1 à 4, **caractérisé en ce que** le broyage est réalisé dans un moulin à meules.

6. Procédé selon l'une des revendications 1 à 5, **caractérisé en ce que** le produit alimentaire est choisi parmi les produits à base de lait, les produits à base de lait fermenté, les produits contenant des baies, les aliments pour bébés, les aliments nutritifs, les produits céréaliers, les produits à base de céréales fermentées et les produits sans gluten.

7. Procédé selon l'une des revendications 1 à 6, **caractérisé en ce que** le flux latéral comprend également du marc, gâteau de marc ou sédiment originaires du traitement de la rhubarbe.

8. Produit alimentaire **caractérisé en ce que** le produit alimentaire contient au moins 6g/100g de fibres, qu'il est fabriqué par le procédé selon l'une des revendications 1 à 7 et que le produit alimentaire comprend une suspension ayant une teneur en matière sèche de 5 à 30 % en poids et comprenant des particules ayant une taille de particules moyenne de 50 à 1000 µm mesurée par diffraction laser.

9. Produit alimentaire selon la revendication 8, **caractérisé en ce que** la suspension comprend des particules ayant une granulométrie moyenne de D50 = 50 µm à D50 = 200 µm mesurée par diffraction laser.

10. Produit alimentaire selon la revendication 8, **caractérisé en ce que** la suspension comprend des particules ayant une granulométrie moyenne de D90 = 100 µm à D90 = 1000 µm mesurée par diffraction laser.

11. Produit alimentaire selon la revendication 10, **caractérisé en ce que** le produit alimentaire est choisi parmi les produits à base de lait, les produits à base de lait fermenté, les produits contenant des baies, les aliments pour bébés, les aliments nutritifs, les produits céréaliers, les produits à base de céréales fermentées et les produits sans gluten.
